# FASCICULE DE BREVET EUROPEEN

(11) **EP 2 863 777 B1**
(45) Date de publication et mention de la délivrance du brevet: **06.06.2018**
(21) Numéro de dépôt: 13730915.9
(22) Date de dépôt: 25.06.2013
(51) Int. Cl.: A47J 31/44

(54) **MACHINE DE PRÉPARATION DE BOISSON PAR INFUSION COMPORTANT UNE BASSINELLE COULISSANTE**
MASCHINE MIT VERSCHIEBBARER TROPFENSCHALE ZUR ZUBEREITUNG VON GETRÄNKEN MITTELS INFUSION
MACHINE FOR PREPARING DRINKS BY MEANS OF INFUSION, COMPRISING A SLIDING DRIP TRAY

(30) Priorité: 25.06.2012 FR 1256021
(43) Date de publication de la demande: 29.04.2015
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2013/063320
(87) Numéro de publication internationale: WO 2014/001362

(56) Documents cités:
- EP-A1- 2 342 997
- DE-U1-202004 020 983
- US-A1- 2012 000 933

## Description

L'objet de la présente invention concerne les machines de préparation de boisson comprenant une chambre d'infusion ou d'extraction d'une substance à infuser ou à extraire et comprenant une bassinelle.

De telles machines peuvent être des machines à café et, par exemple, des machines à café de type ESPRESSO. La présente invention pourra cependant également s'appliquer à la production de boissons à partir d'autres matières telles que le thé.

L'invention trouve pour application avantageuse mais non limitative les machines de production de boisson par infusion d'un produit contenu dans un conditionnement. De telles machines à infuser permettent de réaliser une boisson à partir d'un conditionnement de produit de boisson emprisonnée dans une chambre d'infusion dans laquelle est injectée de l'eau de préférence sous pression. L'eau traverse le conditionnement et ressort par un bec verseur ou buse de sortie la dirigeant vers un récipient du type tasse, mug ou verre recueillant la boisson infusée.

Le récipient est généralement posé sur une partie proéminente appelée bassinelle qui permet de recueillir les éventuels débordements ou éclaboussures.

Pour ce faire, la bassinelle est généralement creuse et munie d'une grille ajourée sur laquelle repose le récipient et au travers de laquelle passent les liquides de débordement pour y être stockés temporairement.

La bassinelle est avantageusement rendue amovible de la machine pour être vidangée et nettoyée après fabrication d'une certaine quantité de boissons infusées.

Afin de pouvoir utiliser des récipients de hauteurs variables avec une même machine et tout en limitant les projections de boissons lors du versement de cette dernière depuis la buse de sortie dans la tasse, des solutions ont été adoptées pour modifier la distance entre la buse de sortie et le fond du récipient en fonction de la hauteur du récipient.

Les documents suivants décrivent des machines équipées de bassinelles rétractables EP234997 et DE202004020983.

Certaines solutions prévoient d'articuler en rotation et à distance de la bassinelle un support percé pour récipient de faible hauteur. Ainsi, une position horizontale du support permet de supporter un récipient de faible hauteur et une rotation vers une position verticale du support permet l'insertion d'un récipient de hauteur plus grande. Ce type de solutions ne s'avère pas très pratique en utilisation, notamment du fait de l'écoulement difficilement contrôlable du liquide depuis le support vers une bassinelle. D'autres solutions prévoient de rallonger l'extrémité avale de la buse de sortie, mais ces solutions s'avèrent également peu commodes en pratique.

Il existe donc un besoin consistant à proposer une machine permettant de recueillir efficacement du liquide pour des récipients de tailles variées tout en facilitant l'utilisation pour l'utilisateur.

A cet effet, on prévoit selon l'invention une machine de préparation de boisson par infusion comportant les caractéristiques de la revendication 1. Ainsi, l'invention prévoit de laisser la bassinelle partie intégrante de la machine à infuser quelle que soit la configuration choisie, ce qui permet de limiter l'encombrement et les risques d'égarement de la bassinelle, tout en favorisant une possibilité d'escamotage par coulissement afin de permettre à la machine de recevoir des récipients de plus grande taille. De manière particulièrement avantageuse, la mobilité en coulissement de la machine permet de conserver dans un plan horizontal la surface libre d'un liquide qui serait présent dans la bassinelle. Ainsi, le passage d'une position à l'autre permet de conserver le liquide dans la machine en limitant les risques d'écoulement involontaire. Dans le cadre du développement de la présente invention, il a été constaté qu'une solution qui reposerait sur une rotation d'une bassinelle entraînerait inévitablement un versement non souhaité du liquide présent dans la bassinelle entre la position de support du récipient et une position escamotée.

Ainsi, une telle machine permet d'utiliser des récipients de dimensions variables de façon particulièrement aisée. En effet, si l'utilisateur souhaite verser la boisson dans une tasse de petite dimension, il utilisera la machine en configuration déployée de sorte que la bassinelle rapproche la tasse de l'écoulement de boisson et recueille du liquide de boisson dans la tasse. Si l'utilisateur souhaite verser la boisson dans un récipient de grande dimension, par exemple un mug (ou tasse haute en français), il utilisera la machine en configuration rétractée de sorte que la machine n'interfère pas avec le haut du récipient.

De manière facultative, l'invention comprend en outre au moins l'une quelconque des caractéristiques suivantes :
- le coulissement de la bassinelle se fait dans un plan sensiblement horizontal. En prévoyant que le passage d'une position à l'autre s'effectue par coulissement selon un plan sensiblement horizontal, la présente invention évite que du liquide présent dans la bassinelle ne s'écoule hors de ladite bassinelle. En effet, avec un tel coulissement, du liquide se trouvant dans la bassinelle demeure dans cette dernière alors que la bassinelle est déplacée d'une position à l'autre.
- en position rétractée, la bassinelle est intégralement logée dans le corps de la machine. La bassinelle n'occupe ainsi aucun espace et n'encombre pas le voisinage de la machine.
- la bassinelle présente une face avant verticale et le corps de la machine présente une face verticale à travers laquelle est pratiquée un logement destiné à loger la bassinelle. Ainsi, la bassinelle est aisément rangée et peut être tirée d'avant en arrière et inversement pour être mise en position déployée comme en position rétractée.
- la machine est configurée de sorte qu'en position rétractée la face avant de la bassinelle est disposée au droit de la face verticale de la machine à travers laquelle est pratiquée le logement. En position rétractée de la bassinelle, ces deux faces forment ainsi une continuité. La bassinelle n'est ainsi pas visible depuis l'extérieur, exceptée sa face avant dans le prolongement de la face de la machine traversée par le logement.
- la machine comprend une unique bassinelle. Ainsi, la machine est simple, peu coûteuse et particulièrement compacte tout en permettant l'utilisation de récipients de tailles variées.
- la bassinelle est indépendante du bac à dose. Elle ne coopère pas mécaniquement avec le bac à conditionnements. Ainsi un utilisateur peut retirer la bassinelle de la machine tout en laissant en place le bac à conditionnements. Typiquement, une distance de quelques millimètres sépare la bassinelle du bac à condition nements
- la machine selon l'invention, est configurée de sorte que son corps repose sur le plan de travail de la machine et de sorte que la bassinelle présente au moins un point d'appui destiné à reposer sur ledit plan de travail. Ceci permet de diminuer les vibrations transmises à la bassinelle. De préférence, le bac à conditionnements est quant à lui entièrement supporté par le corps de la machine. Le plan de travail est extérieur à la machine. Il s'agit typiquement d'une table, d'un plan de travail de bar, d'un plan de travail de cuisine, d'une étagère etc.

La grande majorité des machines à infuser domestiques, notamment du type ESPRESSO, utilisent aujourd'hui une pompe vibrante pour augmenter la pression de l'eau chaude lors de l'infusion d'un produit à infuser dans la chambre d'infusion. La pompe vibrante, de par sa constitution et son fonctionnement, génère des vibrations. Ces vibrations, lorsqu'elles sont communiquées au reste de la machine, entraînent des effets acoustiques désagréables ainsi qu'un déplacement de la machine sur le plan de travail. L'un des effets acoustiques néfastes le plus couramment constaté est la mise en vibration de la grille de la bassinelle sous le récipient. Le récipient qui repose sur la bassinelle peut ainsi être renversé.

Une des voies communément utilisées pour réduire les bruits et vibrations générés par la pompe vibrante en fonctionnement consiste à suspendre la pompe avec des éléments déformables en élastomère qui amortissent les vibrations et évitent leur communication au corps de la machine. Il reste néanmoins un passage des vibrations au corps de la machine par l'intermédiaire du circuit hydraulique raccordé à la pompe. Ce passage résiduel est difficile à éliminer et sa réduction à défaut de son élimination reste encore l'objet de travaux chez les fabricants de machine à infuser. La solution de la présente invention, permet de limiter efficacement les vibrations transmises à la bassinelle. Toutes les caractéristiques de la présente invention liées à l'appui de la bassinelle sur le plan de travail et éventuellement sur une surface de la machine peuvent être exploitées indépendamment de l'aspect relatif à l'amovibilité de la bassinelle. Cependant, elles sont avantageusement exploitées en combinaison. Les caractéristiques relatives aux points d'appui de la bassinelle sur le plan de travail peuvent être exploitées indépendamment des caractéristiques relatives à la communication fluidique entre la bassinelle et le bac à conditionnement usagés.
- la machine est configurée de sorte que la bassinelle présente au moins deux points d'appui agencés pour reposer sur le plan de travail, les deux points d'appui étant situés de manière symétrique par rapport au plan médian de la bassinelle. Ceci permet une meilleure stabilité de la bassinelle.
- la bassinelle présente au moins un point d'appui complémentaire configuré pour prendre appui sur le corps de la machine. Cela permet de limiter la surface de frottement lors du passage de la position rétractée à la position déployée.
- la bassinelle présente deux points d'appui complémentaires configurés pour prendre chacun appui sur le corps de la machine. Ainsi, un meilleur coulissement et une meilleure répartition du poids de la bassinelle dans le logement prévu dans le corps sont obtenus.
- la bassinelle présente deux bras portant chacun un point d'appui complémentaire configuré pour prendre appui sur le corps de la machine et les bras sont destinés à être guidés en coulissement lors du passage d'une position à l'autre de la bassinelle. Ces bras, avantageusement symétriques, permettent un meilleur coulissement et une meilleure répartition du poids de la bassinelle dans le logement du corps.
- les deux points d'appui coopèrent avec des surfaces de guidage disposées à l'intérieur du logement à l'intérieur duquel la bassinelle est logée au moins en partie en position rétractée. Ceci permet d'améliorer le coulissement de la bassinelle dans le logement du corps.
- les surfaces de guidage sont sous la forme de glissières parallélépipédiques, les bras présentant une forme complémentaire aux glissières. Ceci permet un guidage optimal des bras lors du coulissement de la bassinelle.
- chacun des points d'appui complémentaire présente une portion élastique assurant le contact entre la bassinelle et le corps et plus précisément la surface de guidage. Ceci permet de diminuer les frottements lors du coulissement de la bassinelle.
- le ou chaque point d'appui complémentaire est en appui avec le corps et plus précisément, typiquement au niveau de la surface de guidage, par une liaison ponctuelle de type sphère sur plan. Ceci permet encore plus de diminuer les frottements lors du coulissement de la bassinelle.
- des moyens d'indexage sont agencés pour indexer la bassinelle par rapport au corps de la machine dans chacune des positions rétractée et déployée. Ainsi, les positions rétractée et déployée de la bassinelle sont garanties.
- la machine est configurée pour recevoir des conditionnements enfermant un produit à infuser, pour effectuer une extraction du produit contenu dans le conditionnement, laquelle machine comprend un bac de recueillement des conditionnements ayant été infusés, la machine étant en outre configurée de sorte que le bac communique fluidiquement avec la bassinelle en position déployée. De manière optionnelle mais particulièrement avantageuse, la machine étant également configurée de sorte que le bac communique fluidiquement avec la bassinelle en position rétractée. Ainsi, la bassinelle peut recueillir les pertes de liquide en provenance du bac à conditionnements ayant été infusés, ce bac étant aussi appelé bac à conditionnements usagés. Les caractéristiques relatives à la communication fluidique entre la bassinelle et le bac à conditionnement usagés peuvent être exploitées indépendamment des caractéristiques relatives au(x) point(s) d'appui de la bassinelle sur le plan de travail permettant de limiter les vibrations.
- le bac à conditionnements n'est pas en contact avec la bassinelle. Le bac à conditionnements est distant de la bassinelle. Cela permet d'éviter la propagation des vibrations à la bassinelle.
- le bac présente un orifice disposé de sorte qu'en position déployée et en position rétractée, l'orifice soit situé au droit de la bassinelle. Ainsi, du liquide présent dans le bac à conditionnements peut s'écouler hors de ce dernier quelle que soit la position déployée ou rétractée de la bassinelle.
- la bassinelle comprend deux évidements d'écoulement débouchant à sa partie supérieure et communicant avec son intérieur, lesdits deux évidements d'écoulement étant disposés sur la bassinelle pour que l'un des deux soit en communication fluidique avec l'orifice du bac dans la position rétractée de la bassinelle et que l'autre soit en communication fluidique avec l'orifice du bac dans la position déployée de la bassinelle. Ainsi il y a toujours un moyen de communication fluidique entre le bac et l'intérieur de la bassinelle, ceci pour la position rétractée comme la position déployée, l'orifice pratiqué dans le fond du bac à conditionnements restant en communication fluidique avec l'intérieur de la bassinelle pour permettre un écoulement invisible à l'utilisateur de liquide dans la machine.
- la bassinelle comprend un espace interne creux formant réceptacle de liquide. Ceci permet la réception et le stockage temporaire de liquides de provenances diverses à l'intérieur de la bassinelle.
- le réceptacle de la bassinelle est recouvert de parties en saillie s'étendant sensiblement verticalement et dont certaines au moins des extrémités supérieures sont contenues dans un même plan pour former une surface d'appui pour un récipient destiné à être posé sur la bassinelle, le réceptacle et les parties en saillie formant une pièce unique. De préférence, toutes les nervures ont leurs extrémités qui sont contenues dans un plan. Ainsi, une surface d'appui uniforme est procurée pour le récipient, cette surface d'appui étant sensiblement équivalente à celle procurée par une grille sans en présenter les désavantages. Comme indiqué précédemment, les vibrations générées par la pompe vibrante, lorsqu'elles sont communiquées au reste de la machine, entraînent des effets acoustiques désagréables ainsi qu'un déplacement de la machine sur le plan de travail. Ces vibrations sont communiquées à la grille de la bassinelle ce qui produit un bruit particulièrement fort et fait vibrer la tasse qui se déplace à la surface de la grille. La présente invention évite ou limite ces inconvénients. En effet, comme la bassinelle est d'un seul tenant, il n'y a plus de risque de vibration entre les diverses pièces la composant et une élimination des mouvements relatifs entre les diverses pièces est obtenue, ce qui n'était pas le cas quand la bassinelle comprenait une grille. En outre, l'invention élimine tout défaut de planéité induit par un mauvais positionnement relatif de la grille sur la bassinelle. Par ailleurs, la grille étant indépendante de la bassinelle, il existe un risque non négligeable de la perdre ce que l'invention empêche puisque la bassinelle est formée d'une pièce unique sans grille indépendante.
- la pièce unique est obtenue par moulage. Ceci permet de réduire les coûts de fabrication. La constitution d'un seul tenant de la bassinelle permet également de réduire le coût de réalisation de la pièce et participe à la réduction du prix de la machine tout en lui conférant une plus grande capacité de recyclage, du fait d'une réduction du nombre de pièces et de l'homogénéité des matériaux employés, ceci dans une démarche d'amélioration portant sur l'éco-conception.
- les parties en saillie forment des nervures verticales. De telles nervures verticales offrent un bon support au récipient porté par la bassinelle et laisse un passage de liquide entre elles suffisant.
- les parties en saillie communiquent fluidiquement entre elles et/ou avec le réceptacle. Ainsi, le liquide s'écoulant à travers les parties en saillie peut être temporairement stocké dans le réceptacle.

L'invention concerne aussi une machine de préparation de boisson par infusion comportant un corps, un module d'extraction d'un produit à infuser et comprenant une bassinelle, ladite machine reposant sur un plan de travail caractérisée en ce que la bassinelle présente au moins un point d'appui destiné à reposer directement sur le plan de travail de la machine ainsi qu'un point d'appui complémentaire reposant sur le corps de la machine.

Du fait d'être en contact avec le plan de travail de la machine, la bassinelle peut compenser les vibrations qui lui sont transmises par le corps de la machine. De plus, comme la bassinelle peut porter un récipient rempli de liquide, son point d'appui directement sur le plan de travail accroît sa stabilité.

De manière optionnelle, la machine peut présenter au moins l'une quelconque des caractéristiques suivantes :
- la machine est configurée de sorte que la bassinelle présente au moins deux points d'appui agencés pour reposer sur le plan de travail, les deux points d'appui étant situés de manière symétrique par rapport au plan médian de la bassinelle.
- la bassinelle présente deux points d'appui complémentaires configurés pour prendre chacun appui sur le corps de la machine.
- la bassinelle présente deux bras portant chacun un point d'appui complémentaire configuré pour prendre appui sur le corps de la machine et les bras sont destinés à être guidés en coulissement lors du passage d'une position à l'autre de la bassinelle.
- les deux points d'appui coopèrent avec des surfaces de guidage disposées à l'intérieur du logement à l'intérieur duquel la bassinelle est logée au moins en partie en position rétractée.
- les surfaces de guidage sont sous la forme de glissières parallélépipédiques, les bras présentant une forme complémentaire aux glissières.
- chacun des points d'appui complémentaire présente une portion élastique assurant le contact entre la bassinelle et le corps et plus précisément la surface de guidage.
- le ou chaque point d'appui complémentaire est en appui avec le corps et plus précisément, typiquement au niveau de la surface de guidage, par une liaison ponctuelle de type sphère sur plan.
- des moyens d'indexage sont agencés pour indexer la bassinelle par rapport au corps de la machine dans chacune des positions rétractée et déployée.

Dans un mode de réalisation, la bassinelle est escamotable. L'escamotage peut se faire autrement que par coulissement, par exemple par pivotement. Il est avantageux de garder la bassinelle lors de l'escamotage dans un même plan horizontal afin que le contenu liquide de la bassinelle ne se renverse pas.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 est un schéma illustrant une vue en perspective d'une machine de préparation de boisson selon la présente invention, la bassinelle de ladite machine étant en position rétractée dans le corps de la machine,
La figure 2 est un schéma illustrant une vue en perspective d'une machine de préparation de boisson selon la présente invention, la bassinelle de ladite machine étant en position déployée hors du corps de la machine,
La figure 3 est un schéma illustrant une vue de dessus en perspective d'une bassinelle d'une machine de préparation de boisson selon la présente invention, la bassinelle étant agrandie par rapport aux figures 1 et 2,
La figure 4 est un schéma illustrant une vue de dessous en perspective d'une bassinelle d'une machine de préparation de boisson selon la présente invention, la bassinelle étant agrandie par rapport aux figures 1 et 2,
La figure 5 est un schéma illustrant une vue en perspective d'une machine de préparation de boisson selon la présente invention, cette machine présentant un bac de recueillement de conditionnements usagés qui n'était pas présent sur les figures 1 et 2, la bassinelle de ladite machine étant en position rétractée dans le corps de la machine à cette figure,
La figure 6 est un schéma illustrant une vue en perspective d'une machine de préparation de boisson selon la présente invention, la bassinelle de ladite machine étant en position déployée à cette figure 6.
La figure 7 est un schéma illustrant une vue en perspective d'une machine de préparation de boisson selon la présente invention, la bassinelle de ladite machine étant en position rétractée dans le corps de la machine et un récipient de grande taille étant disposé sous le module d'extraction,
La figure 8 est un schéma illustrant une vue en perspective d'une machine de préparation de boisson selon la présente invention, la bassinelle de ladite machine étant en position déployée hors du corps de la machine et un récipient de petite taille étant disposé sous le module d'extraction,
Les figures 9 et 10 sont des schémas respectifs illustrant chacun une vue en coupe d'une machine de préparation de boisson selon la présente invention, ces vues montrant respectivement un évidement d'écoulement prévu sur la bassinelle en position sous l'orifice du bac de recueillement de conditionnements usagés, ceci respectivement pour la position rétractée et la position déployée de la bassinelle.

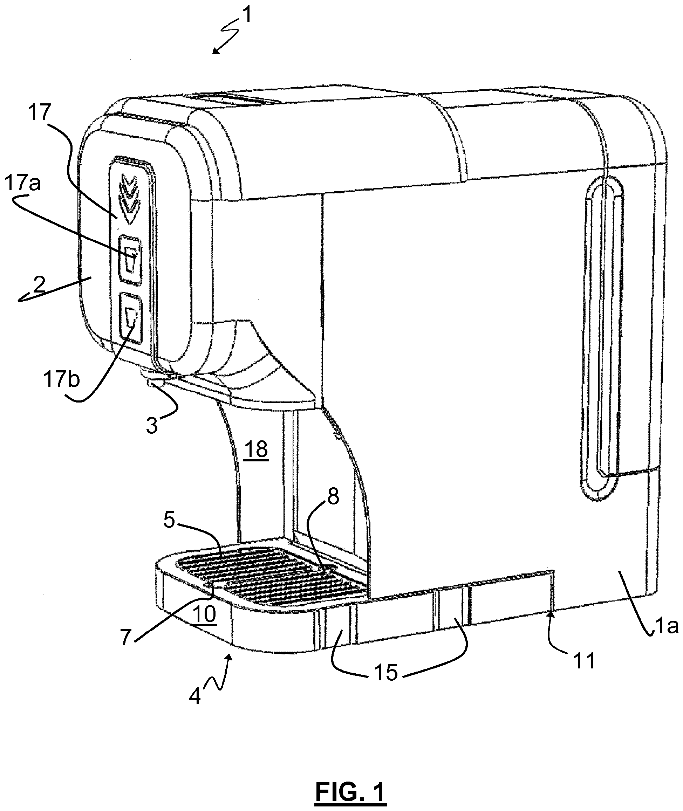

Dans le cadre de la présente invention, on peut utiliser des conditionnements du type présentées sur les figures 1 à 10 et décrits dans le document WOA9507041 bien que cet exemple ne soit pas limitatif. Sur ces figures le conditionnement forme une dose et le produit infusé, par exemple la mouture de café, est enfermé dans un volume intérieur de la dose constituée par l'assemblage de couches jointes par leurs périphéries au niveau d'un pourtour. Avantageusement, la présente invention est utilisable avec des types variés de conditionnements. Elle n'implique notamment pas que le pourtour de la dose 1 soit rigide. De manière plus générale, l'invention s'applique quel que soit le type de conditionnements. Elle s'applique aux conditionnements présentant une enveloppe extérieure souple ou rigide de type capsule. Elle s'applique également aux conditionnements dont l'enveloppe extérieure est apte à disparaître au moins en partie lors de l'infusion, par dissolution par exemple. Elle s'applique encore aux conditionnements formés d'un produit à infuser agrégé par un liant et/ou par l'application d'une pression. Un tel conditionnement formé d'un agrégat de produit à infuser tel que le café peut être constitué en dehors de la machine ou être constitué par un module dédié de la machine.

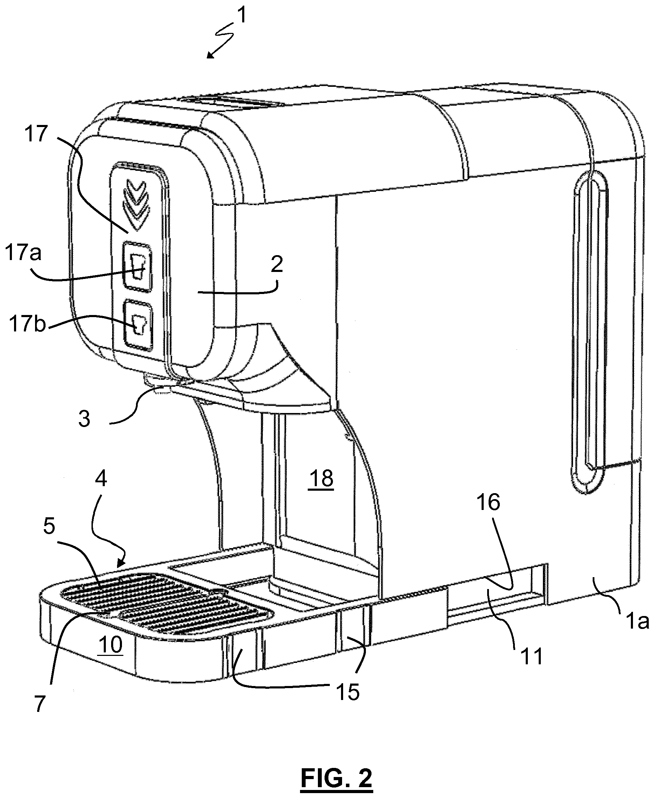

En se référant à toutes les figures et plus particulièrement aux figures 1 et 2, ces figures montrent une machine 1 de préparation de boisson, notamment une machine de préparation de boisson infusée, par exemple mais pas seulement une machine à café ESPRESSO. La machine 1 présente un corps 1a et, à la partie avant du corps 1a, un module 2 d'extraction d'une boisson à infuser. Le module 2 est muni à sa partie inférieure d'une buse 3 de sortie de boisson, également désigné bec verseur, destinée à verser ladite boisson dans un récipient 20, 20a disposé en dessous de ladite buse 3.

La machine 1 est configurée pour recevoir des conditionnements enfermant du produit à infuser, pour effectuer une extraction du produit contenu dans le conditionnement dans le module d'extraction 2 et comprend un bac 6 de recueillement des conditionnements ayant été infusés. Généralement, le bac 6 se loge dans un espace 18 défini par le corps 1a de la machine. Le bac 6 a été ôté aux figures 1 et 2 pour mieux apercevoir la bassinelle 4. Dans des variantes de réalisation, le bac 6 est porté par la machine tout en étant à l'extérieur du corps. Dans ces variantes, le corps présente un support pour le bac mais ne présente pas d'espace intérieur pour loger le bac.

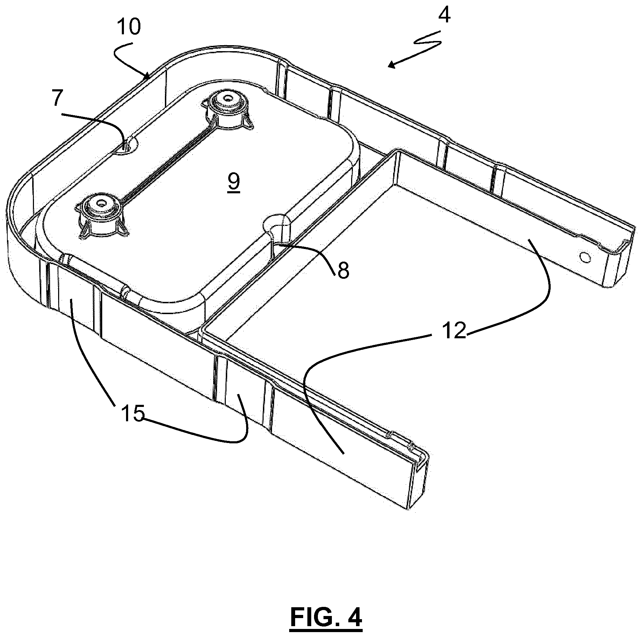

La machine 1 est donc munie d'une bassinelle 4, la bassinelle 4 définissant un réceptacle 9 creux interne, particulièrement bien visible à la figure 4. Le réceptacle 9 est recouvert à sa partie supérieure de parties en saillie 5 s'étendant verticalement ou fortement inclinées par rapport à l'horizontal, ceci dans la portion supérieure dudit réceptacle 9. Les extrémités des parties en saillie 5 pointant vers le haut, donc vers le module 2, sont contenues dans un même plan afin de former une surface d'appui offert par la bassinelle pour le support d'un objet tel un récipient 20a posé sur la bassinelle pour recevoir du liquide de boisson.

Ainsi, la grille, selon l'état de la technique, recouvrant une bassinelle classique est remplacée par une série de parties en saillie 5, par exemple des nervures sensiblement verticales, permettant d'obtenir la même surface d'appui qu'une grille pour le fond du récipient 20a telle qu'une tasse mais sans possibilité de mouvement relatif des parties en saillie 5 par rapport à la bassinelle 4 et donc sans possibilité de bruits parasites. Une rainure transversale est avantageusement disposée à l'arrière des parties en saillie 5, avantageusement des nervures, de manière à faire communiquer entre elles les volumes de rétention créés entre les parties en saillie 5 pour préserver la capacité de stockage du volume intérieur de la bassinelle 4.

Avantageusement, la bassinelle 4 est monolithique ou d'un seul tenant, notamment en ce qui concerne le réceptacle 9 et les parties en saillie 5. Ainsi, le fond du réceptacle 9 et les parties en saillie 5 sont solidaires, ce qui permet d'éliminer leurs mouvements relatifs et de limiter les vibrations.

De préférence, la pièce d'un seul tenant formée par la bassinelle 4 est en plastique et est obtenue par moulage. La bassinelle 4 est ainsi compacte et rigide. Ceci permet de réduire les coûts de fabrication de la bassinelle 4. Avantageusement, les parties en saillie sont sous la forme de nervures 5 verticales ou fortement inclinées par rapport à l'horizontal. Le fond des nervures 5 communique fluidiquement en débouchant avantageusement sur le réceptacle 9 et en guidant les écoulements, les projections, les éclaboussures de liquide de boisson ou les pertes d'eau à l'intérieur de la machine 1, notamment en provenance du circuit hydraulique de la pompe vibrante, vers ledit réceptacle 9.

Une telle machine 1 comprend souvent en son intérieur une pompe vibrante qui génère des vibrations et les communique à toute la machine et notamment à la bassinelle 4. Ces vibrations sont aussi communiquées à la grille de la bassinelle 4 quand celle-ci n'a pas été remplacée par des parties en saillie 5 comme le prévoit avantageusement la présente invention. La grille et la bassinelle 4 vibrent alors de même que le récipient qu'elles sont susceptibles de porter.

Conformément à la présente invention, afin d'éviter une telle transmission de vibrations néfaste, la machine 1 à infuser est configurée pour que la bassinelle 4 présente une position déployée dans laquelle la bassinelle 4 est agencée pour pouvoir servir de support à un récipient 20a destiné à recevoir la boisson et une position rétractée dans laquelle la bassinelle 4 est logée au moins en partie à l'intérieur du corps 1a de la machine 1, la machine 1 étant configurée de sorte que le passage de la position déployée à la position rétractée et inversement s'effectue par coulissement.

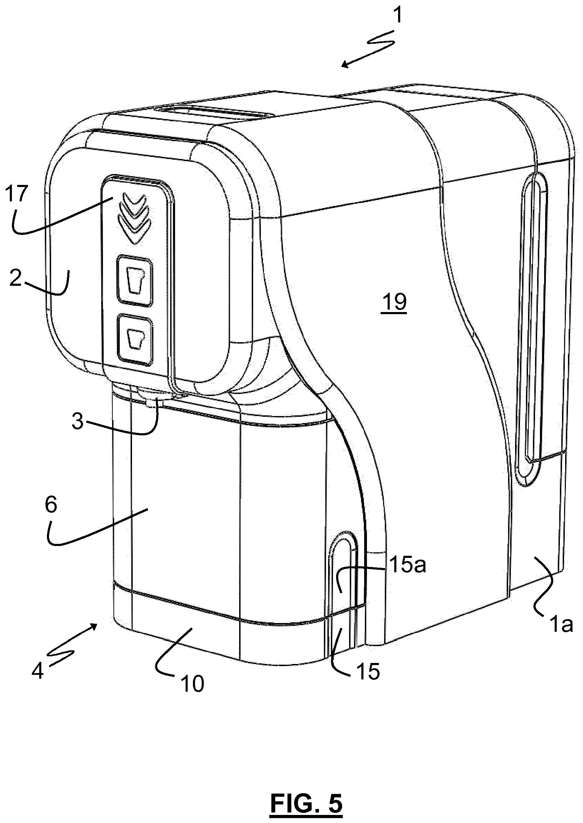

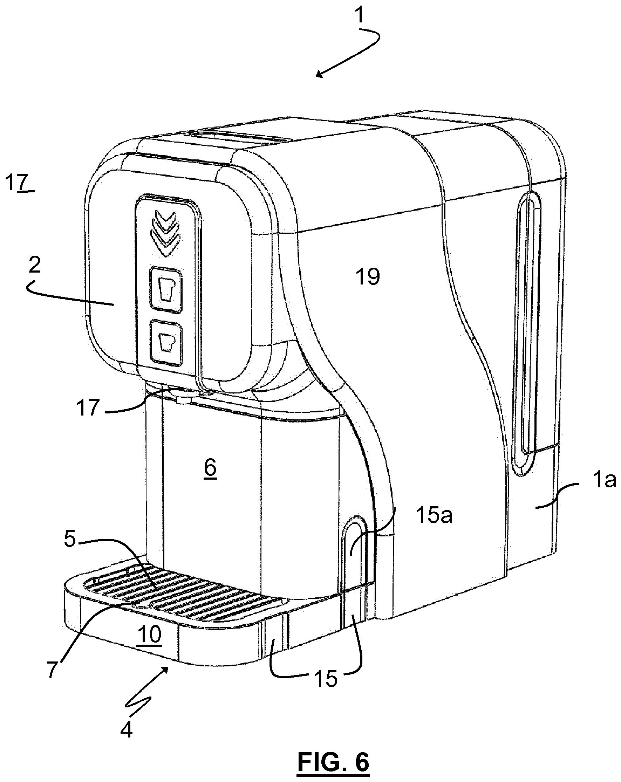

La bassinelle 4 est donc coulissante d'une position rétractée, montrée aux figures 1 et 5, à une position déployée, montrée aux figures 2 et 6. Dans la position rétractée, comme montré à la figure 1, la bassinelle 4 est avantageusement intégralement logée dans le corps 1a de la machine 1. La bassinelle 4 n'occupe ainsi aucun espace et n'augmente donc pas l'encombrement de la machine 1.

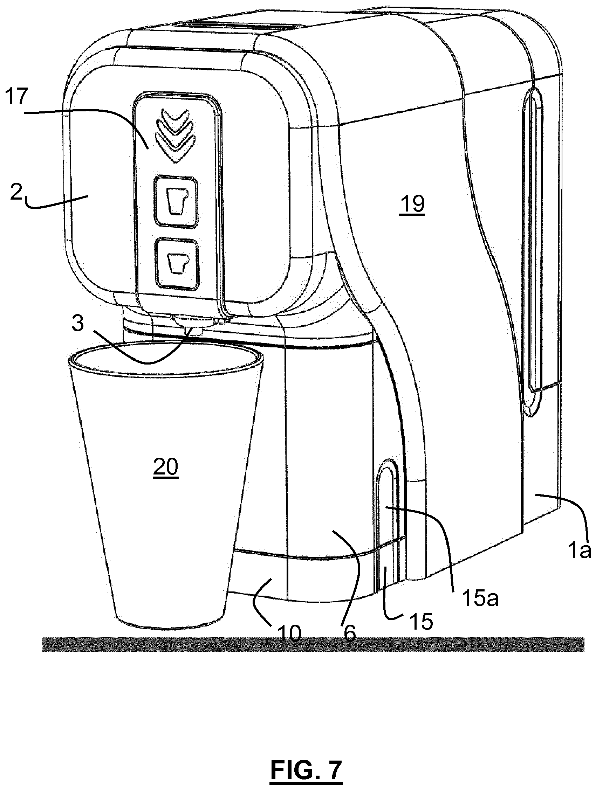

La bassinelle 4 présente une face avant 10 verticale et le corps 1a de la machine 1 présente une face verticale dans laquelle est pratiquée un logement 11 destiné à loger la bassinelle 4. La machine 1 est configurée de sorte qu'en position rétractée la face avant 10 de la bassinelle 4 est disposée au droit de la face avant sensiblement verticale de la machine 1 dans laquelle est pratiquée le logement 11. En position rétractée de la bassinelle 4, ces deux faces sont ainsi continues. La bassinelle 4 n'est donc pas visible depuis l'extérieur à l'exception de sa face avant 10, comme il est particulièrement bien montré aux figures 5 et 7.

En plus de résoudre le problème de la transmission des vibrations de la pompe de la machine 1 à la bassinelle 4, une telle disposition permet de résoudre le problème de l'adaptation de la machine 1 à différentes tailles de récipients 20, 20a de boisson.

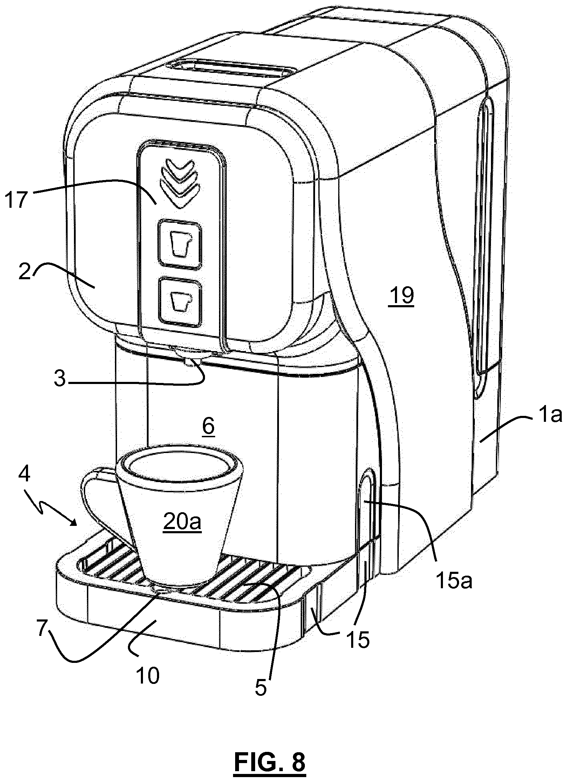

Ainsi, pour un récipient de petite taille 20a, visible à la figure 8, la bassinelle 4 est en position déployée, comme le montrent les figures 2, 6 et 8. La bassinelle 4 supporte ledit récipient de petite taille 20a qui repose sur les nervures 5 de la bassinelle 4. Les éclaboussures ou les projections de liquide lors du versement de la boisson par la buse 3 ou le liquide renversé lors du retrait manuel du récipient 20a par l'utilisateur ou encore du liquide s'écoulant de la machine1, tombent dans le réceptacle 9 creux interne de la bassinelle 4 à travers les nervures 5.

Pour un récipient de grande taille 20, visible à la figure 7, la bassinelle 4 est en position rétractée et dégage de la place en dessous du module d'extraction 2 pour la mise en place d'un récipient de grande taille 20. Ce récipient de grande taille 20 n'est alors pas supporté par la bassinelle 4.

Comme précédemment indiqué, la bassinelle 4 a pour rôle de recueillir des écoulements de liquide, que ce soit du liquide de boisson ou des liquides de débordement voire de dépressurisation du circuit hydraulique.

Une autre source non négligeable d'écoulement de liquide de boisson provient du bac de recueillement de conditionnements usagés. En effet lors de l'infusion les conditionnements sont traversés par de l'eau et en fin d'infusion une petite quantité d'eau continue de s'écouler des conditionnements. Le bac 6 se trouve généralement dans l'intérieur de la machine 1 et le plus souvent sous le module d'extraction ou d'infusion 2. Plus précisément, le module d'extraction ou d'infusion 2 comprend généralement une sortie permettant la libération ou l'éjection du conditionnement usagé en fin d'infusion et la bac 6 est disposé au droit de cette sortie pour que le conditionnement tombe par gravité dans le bac 6.

La bassinelle 4, conformément à une caractéristique avantageuse de la présente invention, permet de recueillir les pertes de liquide à partir du bac 6 à conditionnements usagés, ceci aussi bien dans sa position déployée que dans sa position rétractée. La machine 1 est donc configurée de sorte que le bac 6 communique fluidiquement avec la bassinelle 4 aussi bien en position déployée qu'en position rétractée.

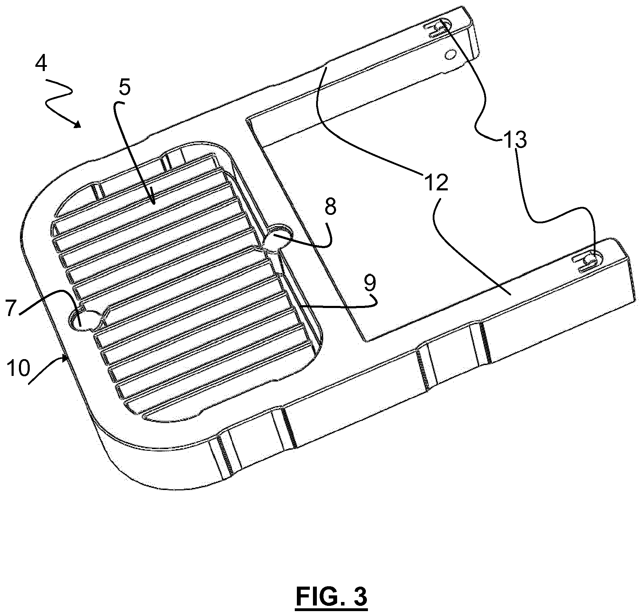

Pour recueillir de telles pertes de liquide de boisson à partir dudit bac 6, la bassinelle 4 présente deux évidements d'écoulement 7 et 8 disposés dans la partie longitudinale médiane de la bassinelle 4, respectivement à l'avant et à l'arrière du réceptacle 9 de liquide de boisson de la bassinelle 4, réceptacle 9 qui est recouvert par les parties en saillie 5, avantageusement des nervures, et qui est visible notamment aux figures 3 et 4. On désigne avant et arrière de la machine les parties de la machine qui sont respectivement la plus proche et la plus éloigné de l'utilisateur en utilisation.

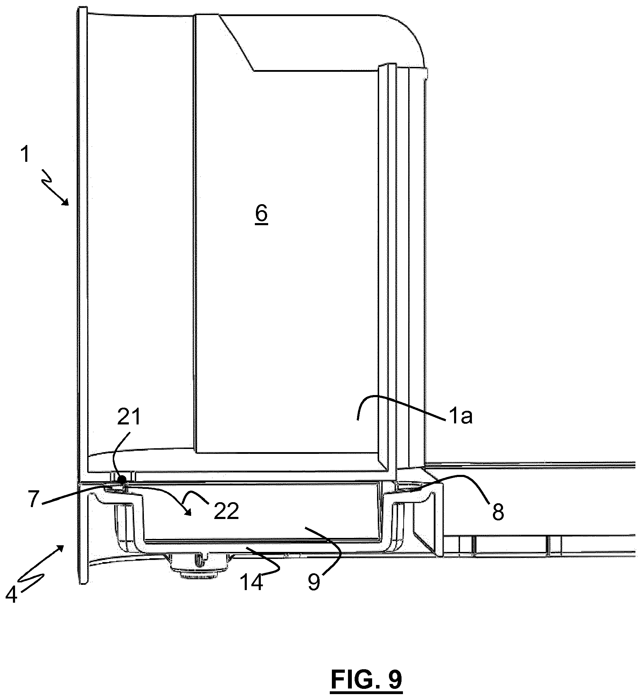

En position escamotée ou rétractée de la bassinelle 4, comme montré aux figures 1 et 5, c'est l'évidement d'écoulement avant 7 de la bassinelle 4 qui se trouve en dessous du bac 6 à conditionnements usagés et qui recueille les pertes en liquide de boisson en provenance dudit bac 6 pour les faire transiter dans le réceptacle interne de la bassinelle 4. Ceci est particulièrement visible à la figure 9.

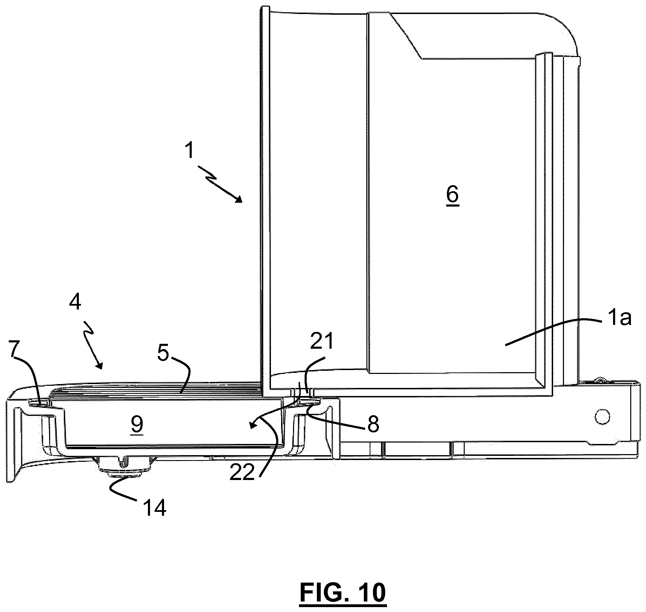

En position déployée de la bassinelle 4, comme montré aux figures 2 et 6, c'est l'évidement d'écoulement arrière 8 de la bassinelle 4 qui se trouve en dessous du bac 6 à conditionnements usagés et qui recueille les pertes en liquide de boisson en provenance dudit bac 6 pour les faire transiter dans le réceptacle 9 interne de la bassinelle 4. Ceci est particulièrement visible à la figure 10.

Ainsi, les pertes de liquide en provenance du bac 6 à conditionnements usagés peuvent être récupérées par le réceptacle 9 interne de la bassinelle 4 dans ses deux positions de travail, soit la bassinelle 4 rétractée ou la bassinelle 4 déployée.

Avantageusement, le bac 6 présente un orifice 21, visible aux figures 9 et 10. Cet orifice 21 est disposé de sorte qu'en configuration déployée et en configuration rétractée, l'orifice 21 soit situé au droit de la bassinelle 4, au-dessus d'un des évidements d'écoulement 7 ou 8 de la bassinelle 4. Le bac 6 peut présenter un fond et l'orifice 21 peut être pratiqué dans le fond du bac 6. Avantageusement, comme montré aux figures 1 et 2, le bac 6 n'est pas en contact avec la bassinelle 4. Cela permet d'éviter la propagation des vibrations issues de la pompe vibrante. En outre cela permet de modifier la position de la bassinelle 4 et de la retirer pour la vider sans avoir à extraire le bac 6 à conditionnements. Avantageusement, la bassinelle 4 n'est pas articulée sur le bac 6. Elle ne coopère pas mécaniquement avec ce dernier. Ainsi un utilisateur peut retirer la bassinelle de la machine tout en laissant en place le bac 6 à conditionnements. Typiquement, une distance de quelques millimètres sépare la bassinelle 4 du bac 6 à conditionnements.

Toutes ces caractéristiques relatives à la communication fluidique entre la bassinelle et le bac à conditionnement usagés peuvent être exploitées indépendamment des caractéristiques relatives au(x) point(s) d'appui de la bassinelle sur le plan de travail permettant de limiter les vibrations. Ainsi, on peut parfaitement prévoir une machine présentant l'une ou plusieurs des caractéristiques mentionnées ci-dessus et relatives à la communication fluidique entre la bassinelle et le bac à conditionnement usagés sans pour autant que la bassinelle de cette machine ne présente un ou plusieurs points d'appui sur le plan de travail.

En se référant à toutes les figures et plus particulièrement aux figures 3 et 4, il est visible que la bassinelle 4 présente au moins un point d'appui, aux figures deux points d'appui complémentaires 13 configurés pour prendre chacun appui sur une portion intérieure du corps 1a de la machine 1. Ceci est obtenu du fait que la bassinelle 4 présente deux bras 12 portant chacun un point d'appui complémentaire 13 destiné à prendre appui sur le corps 1a de la machine 1, lesdits bras 12 étant destinés à servir de guidage en coulissement lors du passage de la bassinelle 4 d'une position à l'autre.

Ces deux bras 12 s'étendent depuis l'arrière du réceptacle 9 de la bassinelle 4 et sont aptes à coopérer avec des surfaces de guidage 16 présentes respectivement de chaque côté du logement 11 porté par le corps 1a de la machine 1. Ces surfaces de guidage 16 sont avantageusement sous forme d'une glissière parallélépipédique aménagée sur chacun des deux côtés longitudinaux internes du logement 11.

Chacun des points d'appui complémentaire 13 présente une portion élastique assurant le contact entre la bassinelle 4 et la surface de guidage 16 présente à l'intérieur du logement 11. Chacun des points d'appui complémentaire 13 est avantageusement en appui avec la surface de guidage 16 par une liaison ponctuelle de type sphère sur plan, comme il est montré à la figure 3. Cela permet de limiter la surface de frottement lors du passage de la position rétractée à la position déployée.

Avantageusement, la bassinelle 4 présente des moyens d'indexage. Ces moyens d'indexage servent à placer la bassinelle 4 exactement dans sa position déployée ou rétractée, afin notamment que la bassinelle 4 soit en dans sa position exacte par rapport au bac 6 de recueillement des conditionnements usagés disposé au-dessus d'elle. Les moyens d'indexage peuvent être des moyens rappelés en saillie pénétrant dans des perçages prévus dans des portions du logement 11 en regard, ceci autant pour la position rétractée que la position déployée de la bassinelle 4 quand les moyens rappelés en saillie sont exactement en regard des perçages.

Il va maintenant être décrit les moyens de support de la bassinelle 4 sur le plan de travail de la machine 1, ceci notamment en regard de la figure 4. Aux figures de la présente demande, la machine 1 est configurée de sorte que son corps 1a repose sur un plan de travail, plan qui est avantageusement sensiblement horizontal. Avantageusement, la bassinelle 4 présente au moins un point d'appui 14 destiné à reposer sur le plan de travail de la machine 1. Ceci permet de diminuer la transmission des vibrations issues de la pompe vibrante.

Préférentiellement, la machine 1 est configurée de sorte que la bassinelle 4 présente au moins un point d'appui et préférentiellement deux points d'appui 14 agencés pour reposer sur le plan de travail de la machine 1. Les deux points d'appui 14 sont situés de manière symétrique par rapport au plan médian longitudinal de la bassinelle 4, ceci avantageusement dans la portion avant de la bassinelle 4. Ceci accroît la stabilité de l'ensemble.

La bassinelle 4 est donc en appui sur le plan de travail de la machine 1 par l'intermédiaire des deux points d'appui 14, avantageusement des pieds en élastomère, situés en partie avant de part et d'autre de son plan vertical médian. L'alignement de ces deux points d'appui 14, avantageusement sous forme de pieds, définit une ligne fictive autour de laquelle le volume de la bassinelle 4 est susceptible de basculer. La bassinelle 4 trouve alors naturellement une position d'équilibre par l'appui de ses bras longitudinaux 12 sur la base des glissières 16 pratiquées dans le corps 1a de la machine 1.

Cette articulation de la bassinelle 4 autour de l'axe horizontal fictif de l'alignement de ses deux points d'appui 14 inférieurs, c'est-à-dire ses deux pieds, permet de faciliter son découplage par rapport au corps 1a de la machine 1 et limite fortement la transmission des vibrations.

Comme précédemment mentionné, en position rétractée, la bassinelle 4 laisse le passage à un récipient de plus grande hauteur directement en appui sur le plan de travail. Les deux points d'appui inférieurs 14 situés à l'avant de la bassinelle 4 restent toujours en contact avec le plan de travail et conservent la même articulation de la bassinelle 4 par rapport au corps 1a de la machine 1 pour limiter également la transmission des vibrations dans cette position escamotée.

Avantageusement, la bassinelle 4, sur ses deux faces longitudinales, comprend au moins une encoche 15, de préférence deux encoches 15 par face. Par l'intermédiaire de ces encoches 15, l'utilisateur peut introduire son doigt dans une ou l'autre des encoches afin de faire coulisser la bassinelle 4 vers l'une de ses deux positions soit rétractée soit déployée qu'elle peut prendre par rapport au corps 1a de la machine 1.

Comme montré aux figures 5 à 8, une encoche complémentaire 15a peut être prévue sur le corps 1a de la machine à infuser afin de permettre à l'utilisateur une reconnaissance rapide que la bassinelle 4 est bien dans sa position exacte rétractée ou sortie, ce qui est très avantageux, en plus des ou sans les moyens d'indexage, pour garantir une position exacte de la bassinelle 4 en dessous du bac 6 de recueillement de conditionnements usagés, afin que la bassinelle 4 reçoive bien par ses évidements d'écoulement 7 et 8 le liquide susceptible de couler depuis le bac 6.

Les figures 5 à 8 montrent une machine à infuser complète, c'est-à-dire avec le bac 6 monté sur le corps. Sur les modes de réalisation illustrés, le bac 6 est inséré dans un espace d'accueil 18. Le bac 6 de recueillement de conditionnements usagés s'étend sensiblement depuis l'extrémité inférieure du module d'extraction 2 et jusqu'à la bassinelle 4. L'espace 18 est occupé par le bac 6 et, dans la position rétractée, il n'est visible de la bassinelle 4 que sa face avant. Le bac 6 avait été ôté aux figures 1 et 2 pour mieux laisser voir la bassinelle 4. Avantageusement, c'est le bac 6 qui porte sur chacun de ses côtés latéraux les encoches complémentaires 15a précédemment mentionnées.

Dans la machine à infuser 1 montrée aux figures 5 à 8, il est aussi prévu une pièce 19 de décoration ou de protection pour la machine 1.

Une machine à infuser complète est montrée à la figure 7 avec comme récipient de boisson un grand récipient 20 du type mug. Dans ce cas, la bassinelle 4 est en position rétractée et, du fait de la présence du bac 6 et de la pièce 19 de décoration, seule est visible la face avant 10 et la partie avant de la face latérale de la bassinelle 4. Dans cette position, c'est l'évidement d'écoulement avant 7 qui se trouve sous l'orifice d'éjection 21 des conditionnements du bac 6, évidement 7 qui n'est pas visible à cette figure car couvert par le bac 6.

Une machine à infuser complète est montrée à la figure 8 avec comme récipient de boisson un petit récipient 20a du type tasse. Dans ce cas, la bassinelle 4 est en position déployée et dans cette position, c'est l'évidement d'écoulement arrière 8 qui se trouve sous l'orifice 21 du bac 6. L'évidement d'écoulement avant 7 est visible mais n'est pas en utilisation.

La correspondance des évidements d'écoulement avant 7 et arrière 8 avec l'orifice 21 du bac 6 de recueillement de conditionnements usagés peut être vue aux figures 9 et 10, ces figures correspondant respectivement à une position rétractée et une position déployée de la bassinelle 4. Le liquide quitte le bac 6 en passant par l'orifice 21 disposé sur le fond du bac 6 et passe par l'un des évidements d'écoulement 7 ou 8 de la bassinelle 4 pour être versé dans le réceptacle 9 interne à ladite bassinelle 4, ceci selon la flèche 22. L'autre évidement d'écoulement 8 ou 7 que celui 7 ou 8 placé sous l'orifice 21 du bac est alors inopérant.

Enfin, avantageusement, pour tout type de machine 1 à infuser sur sa face avant formée par le module d'extraction 2, il est prévu un panneau de commande 17 muni de pictogrammes 17a et 17, avantageusement sous forme de boutons, permettant de sélectionner la quantité de boisson à verser selon le type de récipient que l'on veut utiliser, soit un grand récipient 20 ou soit un petit récipient 20a et d'actionner le versement de la quantité de boisson sélectionnée.

### REFERENCES

1. Machine
1a. Corps
2. Module
3. Buse
4. Bassinelle
5. Nervures
6. Bac
7. Evidement avant
8. Evidement arrière
9. Réceptacle
10. Face avant
11. Logement
12. Bras
13. Point d'appui complémentaire
14. Point d'appui
15. Encoche
15a. Encoche complémentaire
16. Glissière
17. Panneau de commande
17a, 17b. Pictogramme
18. Espace d'accueil du bac 6
19. Pièce de protection
20 et 20a. Récipient
21.Orifice
22. Flèche

## Revendications

1. Machine (1) de préparation de boisson par infusion comportant un corps (1a), un module (2) d'extraction d'un produit à infuser contenu dans un conditionnement et comprenant une bassinelle (4), la machine étant configurée pour présenter une position déployée dans laquelle la bassinelle (4) peut servir de support à un récipient (20, 20a) destiné à recevoir la boisson et une position rétractée dans laquelle la bassinelle (4) est logée au moins en partie à l'intérieur du corps (1a) de la machine (1), la machine (1) étant configurée de sorte que le passage de la position déployée à la position rétractée et inversement s'effectue par coulissement **caractérisée en ce qu'**elle est configurée de manière à reposer sur un plan de travail et de manière à ce que la bassinelle (4) présente au moins un point d'appui (14) destiné à reposer sur ledit plan de travail.

2. Machine (1) selon la revendication précédente, dans laquelle, en position rétractée, la bassinelle (4) est intégralement logée dans le corps (1a) de la machine (1) et dans laquelle de préférence la bassinelle (4) présente une face avant (10) verticale et le corps (1a) de la machine (1) présente une face verticale comportant un logement (11) destiné à loger la bassinelle (4) et configurée de sorte qu'en position rétractée la face avant (10) de la bassinelle (4) est de préférence disposée au droit de la face verticale de la machine (1) comportant le logement (11).

3. Machine (1) selon l'une quelconque des revendications précédentes, laquelle machine (1) est configurée de sorte que la bassinelle (4) présente au moins deux points d'appui (14) agencés pour reposer sur ledit plan de travail, les deux points d'appui (14) étant situés de manière symétrique par rapport à un plan médian de la bassinelle (4).

4. Machine (1) selon l'une quelconque des revendications précédentes, pour laquelle la bassinelle (4) présente au moins un point d'appui complémentaire (13) configuré pour prendre appui sur le corps (1a) de la machine (1).

5. Machine (1) selon la revendication précédente, dans laquelle la bassinelle (4) présente deux points d'appui complémentaires (13) configurés pour prendre chacun appui sur le corps (1a) de la machine (1).

6. Machine (1) selon la revendication précédente, dans laquelle la bassinelle (4) présente au moins deux bras (12) portant chacun un point d'appui complémentaire (13) configuré pour prendre appui sur le corps (1a) de la machine (1) et dans laquelle les bras (12) sont destinés à être guidés en coulissement lors du passage d'une position à l'autre de la bassinelle (4).

7. Machine (1) selon l'une quelconque des deux revendications précédentes, pour laquelle les deux points d'appui complémentaires (13) coopèrent avec des surfaces de guidage (16) disposées à l'intérieur du logement (11) à l'intérieur duquel la bassinelle (4) est logée au moins en partie en position rétractée.

8. Machine (1) selon l'une quelconque des deux revendications précédentes, pour laquelle chacun des points d'appui complémentaire (13) présente une portion élastique assurant le contact entre la bassinelle (4) et le corps (1a) de la machine et dans laquelle chaque point d'appui complémentaire (13) est en appui avec le corps (1a) de préférence par une liaison ponctuelle de type sphère sur plan.

9. Machine (1) selon l'une quelconque des revendications précédentes, comprenant des moyens d'indexage agencés pour indexer la bassinelle (4) par rapport au corps (1a) de la machine (1) dans chacune des positions rétractée et déployée.

10. Machine (1) selon l'une quelconque des revendications précédentes, laquelle machine (1) est configurée pour recevoir des conditionnements enfermant un produit à infuser, pour effectuer une extraction du produit contenu dans le conditionnement, laquelle machine (1) comprend un bac (6) de recueillement des conditionnements ayant été infusées, la machine (1) étant en outre configurée de sorte que le bac (6) communique fluidiquement avec la bassinelle (4) en position déployée et en position rétractée.

11. Machine (1) selon la revendication précédente, dans laquelle le bac (6) à conditionnements est mécaniquement indépendant de la bassinelle (4).

12. Machine (1) selon l'une quelconque des deux revendications précédentes, pour laquelle le bac (6) présente un orifice (21) disposé de sorte qu'en position déployée et en position rétractée, l'orifice (21) soit situé au droit de la bassinelle (4).

13. Machine (1) selon la revendication précédente, pour laquelle la bassinelle (4) comprend deux évidements (7, 8) d'écoulement débouchant à sa partie supérieure et communicant avec son intérieur, lesdits deux évidements (7, 8) d'écoulement étant disposés sur la bassinelle (4) pour que l'un (7) des deux soit en communication fluidique avec l'orifice (21) du bac (6) dans la position rétractée de la bassinelle (4) et que l'autre (8) soit en communication fluidique avec l'orifice (21) du bac (6) dans la position déployée de la bassinelle (4).

14. Machine (1) selon l'une quelconque des revendications précédentes, pour laquelle la bassinelle (4) comprend un espace interne creux formant réceptacle (9) de liquide et dans laquelle le réceptacle (9) de la bassinelle (4) est recouvert de parties en saillie (5) s'étendant sensiblement verticalement et dont certaines des extrémités supérieures au moins sont contenues dans un même plan pour former une surface d'appui pour un récipient (20, 20a) destiné à être posé sur la bassinelle (4), le réceptacle (9) et les parties en saillie (5) formant une pièce unique.

15. Machine (1) selon la revendication précédente, pour laquelle la pièce unique est obtenue par moulage et dans laquelle les parties en saillie (5) forment de préférence des nervures verticales.

## Patentansprüche

1. Gerät (1) zur Zubereitung eines Aufgussgetränks, bestehend aus einem Gehäuse (1a) und einem Modul (2) zur Extraktion eines in einer Abfüllung enthaltenen Aufgussprodukts, welche eine kleine Wanne (4) umfasst, wobei das Gerät so gestaltet ist, dass die kleine Wanne (4) in einer ausgefahrenen Position als Halterung für ein zur Aufnahme des Getränks bestimmten Behältnisses (20, 20a) dienen kann, und in einer eingefahrenen Position zumindest teilweise im Inneren des Gehäuses (1a) des Gerätes (1) gelagert ist, wobei das Gerät (1) so gestaltet ist, dass der Wechsel von der ausgefahrenen Position in die eingefahrene Position und umgekehrt durch eine Schubbewegung erfolgt, **dadurch gekennzeichnet dass** es so gestaltet ist, dass es auf einer Arbeitsfläche abgestellt werden kann und dadurch, dass die kleine Wanne (4) mindestens einen Auflagerpunkt (14) aufweist, der auf dieser Arbeitsfläche aufliegt.

2. Gerät (1) nach dem vorhergehenden Anspruch, in welchem die kleine Wanne (4) in eingefahrener Position komplett im Gehäuse (1a) des Geräts (1) gelagert ist. In diesem Gerät weist vorzugsweise die kleine Wanne (4) eine senkrechte Frontfläche (10) und das Gehäuse (1a) des Geräts (1) eine senkrechte Fläche mit einer Aufnahme (11) für die kleine Wanne (4) auf, wobei diese Fläche so gestaltet ist, dass die Frontfläche (10) der kleinen Wanne (4) in der eingefahrenen Position vorzugsweise im rechten Winkel zur vertikalen Fläche des Geräts (1) mit der Aufnahme (11) steht.

3. Gerät (1) nach einem der vorhergehenden Ansprüche, in welchem das Gerät (1) so gestaltet ist, dass die kleine Wanne (4) mindestens zwei Auflagerpunkte (14) aufweist, die so angeordnet sind, dass sie auf besagter Arbeitsfläche aufstehen, wobei die beiden Auflagerpunkte (14) symmetrisch zu einer Mittelebene der kleinen Wanne (4) angeordnet sind.

4. Gerät (1) nach einem der vorhergehenden Ansprüche, bei dem die kleine Wanne (4) mindestens einen zusätzlichen Auflagerpunkt (13) aufweist, der so gestaltet ist, dass er am Gehäuse (1a) des Geräts (1) anliegt.

5. Gerät (1) nach dem vorhergehenden Anspruch, in welchem die kleine Wanne (4) zwei zusätzliche Auflagerpunkte (13) aufweist, die so gestaltet sind, dass sie jeweils am Gehäuse (1a) des Geräts (1) anliegen.

6. Gerät (1) nach dem vorhergehenden Anspruch, in welchem die kleine Wanne (4) mindestens zwei Arme (12) umfasst, von denen jeder einen zusätzlichen Auflagerpunkt (13) trägt, der so gestaltet ist, dass er am Gehäuse (1a) des Geräts (1) anliegt, und in welchem die Arme (12) dazu bestimmt sind, beim Positionswechsel der kleinen Wanne (4) in einer Schubbewegung geführt zu werden.

7. Gerät (1) nach einem der beiden vorhergehenden Ansprüche, bei dem die beiden zusätzlichen Auflagerpunkte (13) mit den Führungsflächen (16) im Innern der Aufnahme (11) zusammenwirken, wobei die kleine Wanne (4) im Innern der Aufnahme mindestens teilweise eingefahren gelagert ist.

8. Gerät (1) nach einem der beiden vorhergehenden Ansprüche, bei dem jeder der zusätzlichen Auflagerpunkte (13) einen elastischen Abschnitt aufweist, welcher den Kontakt zwischen der kleinen Wanne (4) und dem Gehäuse (1a) des Gerätes gewährleistet und in welchem jeder zusätzliche Auflagerpunkt (13) am Gehäuse (1a) vorzugsweise durch eine punktuelle Verbindung, wie zum Beispiel der Berührpunkt einer Kugel mit einer Ebene, am Gehäuse anliegt

9. Gerät (1) nach einem der vorhergehenden Ansprüche, welches Indexierungsmittel aufweist, die so angeordnet sind, dass die kleine Wanne (4) in Bezug auf das Gehäuse (1a) des Geräts (1) in der ein- und ausgefahrenen Position indexiert werden kann.

10. Gerät (1) nach einem der vorhergehenden Ansprüche, in welchem das Gerät (1) so gestaltet ist, dass Abfüllungen eines Aufgussprodukts aufgenommen werden können, um das in der Abfüllung enthaltene Produkt zu extrahieren, wobei das Gerät (1) einen Behälter (6) zur Aufnahme der aufgegossenen Abfüllungen enthält, wobei das Gerät (1) des Weiteren so gestaltet ist, dass der Behälter (6) mit der kleinen Wanne (4) in eingefahrener und ausgefahrener Position in Strömungsverbindung steht.

11. Gerät (1) nach dem vorhergehenden Anspruch, in welchem der für die Abfüllungen bestimmte Behälter (6) mechanisch unabhängig von der kleinen Wanne (4).

12. Gerät (1) nach einem der beiden vorhergehenden Ansprüche, in welchem der Behälter (6) eine Öffnung (21) aufweist, die so angeordnet ist, dass sie in eingefahrener und in ausgefahrener Position rechtwinklig zur kleinen Wanne (4) steht.

13. Gerät (1) nach dem vorhergehenden Anspruch, in dem die kleine Wanne (4) zwei Ausflussaussparungen (7, 8) aufweist, die zu deren oberen Bereich führen und mit dem Innenbereich verbunden sind, wobei die beiden Ausflussaussparungen (7, 8) in der kleinen Wanne (4) so angeordnet sind, dass eine der beiden Ausflussaussparungen (7) in eingefahrener Position der kleinen Wanne (4) in Strömungsverbindung mit der Öffnung (21) des Behälters (6) steht und die andere (8) in ausgefahrener Position der kleinen Wanne (4) mit der Öffnung (21) des Behälters (6) in Strömungsverbindung steht.

14. Gerät (1) nach einem der vorhergehenden Ansprüche, indem die kleine Wanne (4) einen hohlen Innenraum aufweist, der einen Flüssigkeitsbehälter (9) bildet, und in welchem der Flüssigkeitsbehälter (9) und die kleine Wanne (4) mit vorspringenden Teilen (5) bedeckt ist, die sich im Wesentlichen senkrecht erstrecken und von denen zumindest einige der oberen Enden auf ein und derselben Ebene liegen, um eine Auflagefläche für einen Behälter (20, 20a) zu bilden, der dazu bestimmt ist, auf die kleine Wanne (4) gestellt zu werden, wobei der Flüssigkeitsbehälter (9) und die vorspringenden Teile (5) ein einziges Stück bilden.

15. Gerät (1) nach dem vorhergehenden Anspruch, in dem das einzige Stück durch Formung erzielt wird und die vorspringenden Teile (5) vorzugsweise vertikale Rippen bilden.

## Claims

1. A machine (1) for preparing drinks by means of infusion, comprising a body (1a), a module (2) for extracting a product to be infused, contained in a packaging and comprising a drip tray (4), with the machine being so designed as to have a deployed position in which the drip tray (4) can support a container (20, 20a) intended to receive the drink and a retracted position in which the drip tray (4) is accommodated at least partially inside the body (1a) of the machine (1), with the machine (1) being so configured as to move from the deployed position to the retracted position and vice versa by sliding, **characterized in that** it is so configured that it is supported by a work top and so that the drip tray (4) has at least one support point (14) intended to rest on said work top.

2. A machine (1) according to the preceding claim, wherein, in the retracted position, the drip tray (4) is totally accommodated inside the body (1a) of the machine (1) and wherein the drip tray (4) preferably has a vertical front face (10) and the body (1a) of the machine (1) has a vertical face comprising a recess (11) intended to accommodate the drip tray (4) and so configured that, in the retracted position, the front face (10) of the drip tray (4) is preferably positioned perpendicularly to the vertical face of the machine (1) comprising the recess (11).

3. A machine (1) according to any one of the preceding claims, wherein the machine (1) is so configured that the drip tray (4) has at least two support points (14) so arranged as to be supported by said work top, with the two support points (14) being positioned symmetrically relative to a mid-plane of the drip tray (4).

4. A machine (1) according to any one of the preceding claims, wherein the drip tray (4) has at least one additional support point (13) so configured as to be supported by the body (1a) of the machine (1).

5. A machine (1) according to the preceding claim, wherein the drip tray (4) has two additional support points (13) so configured that each one can be supported by the body (1a) of the machine (1).

6. A machine (1) according to the preceding claim, wherein the drip tray (4) has at least two arms (12) having each one additional support point (13) so configured as to be supported by the body (1a) of the machine (1) and wherein the arms (12) are intended to be guided to slide when the drip tray (4) switches from one position to the other position.

7. A machine (1) according to any one of the preceding two claims, wherein the two additional support points (13) cooperate with guide surfaces (16) positioned inside the recess (11) inside which the drip tray (4) is accommodated at least partially in the retracted position.

8. A machine (1) according to any one of the preceding two claims, wherein each one of the additional support points (13) has an elastic portion providing contact between the drip tray (4) and the body (1a) of the machine and wherein each additional support point (13) is supported by the body (1a), preferably by a point link of the sphere on plane type.

9. A machine (1) according to any one of the preceding claims, comprising indexing means so arranged as to index the drip tray (4) relative to the body (1a) of the machine (1) in each one of the retracted and deployed positions.

10. A machine (1) according to any one of the preceding claims, with said machine (1) being so configured as to receive packagings containing a product to be infused, to extract the product contained in the packaging, with said machine (1) comprising a box (6) for collecting the infused packagings, and with the machine (1) being further so configured that the box (6) is in fluid communication with the drip tray (4) in the deployed position and in the retracted position.

11. A machine (1) according to the preceding claim, wherein the packaging box (6) is mechanically independent of the drip tray (4).

12. A machine (1) according to any one of the preceding two claims, wherein the box (6) has a hole (21) so positioned that, in the deployed position and in the retracted position, the hole (21) is positioned perpendicularly to the drip tray (4).

13. A machine (1) according to the preceding claim, wherein the drip tray (4) comprises two draining recesses (7, 8) opening at the upper part thereof, and communicating with the inside thereof, with said two draining recesses (7, 8) being positioned on the drip tray (4) so that one (7) of these is in fluid communication with the hole (21) of the box (6) in the retracted position of the drip tray (4) and that the other one (8) is in fluid communication with the hole (21) of the box (6) in the deployed position of the drip tray (4).

14. A machine (1) according to any one of the preceding claims, wherein the drip tray (4) comprises a hollow inner space forming a receptacle (9) for a liquid, and wherein the receptacle (9) of the drip tray (4) is covered with protruding parts (5) which extend substantially vertically and at least some upper ends of which are contained in the same plane so as to form a support surface for a container (20, 20a) intended to be positioned on the drip tray (4), with the container (9) and the protruding parts (5) forming a single part.

15. A machine (1) according to the preceding claim, wherein the single part is obtained by molding and wherein the protruding parts (5) preferably form vertical ribs.
